# EUROPÄISCHE PATENTSCHRIFT

(11) **EP 3 467 447 B1**
(45) Veröffentlichungstag und Bekanntmachung des Hinweises auf die Patenterteilung: **25.09.2019**
(21) Anmeldenummer: 17195221.1
(22) Anmeldetag: 06.10.2017
(51) Int. Cl.: G01F 23/284, G01S 13/38, G01F 22/00

(54) **FÜLLSTANDMESSGERÄT MIT MEHREREN RADARCHIPS**
FILL LEVEL MEASURING DEVICE WITH MULTIPLE RADAR CHIPS
APPAREIL DE MESURE DE NIVEAU DE REMPLISSAGE À UNE PLURALITÉ DES CHIPS RADAR

(43) Veröffentlichungstag der Anmeldung: 10.04.2019
(73) Patentinhaber: VEGA Grieshaber KG, 77709 Wolfach (DE)
(72) Erfinder: WELLE, Roland, 77756 Hausach (DE); BÖRSIG, Jörg, 77776 Schapbach (DE); WÄLDE, Steffen, 78078 Niedereschach (DE)
(74) Vertreter: Maiwald Patent- und Rechtsanwaltsgesellschaft mbH

(56) Entgegenhaltungen:
- EP-A1- 2 963 396
- EP-A1- 3 171 138
- WO-A1-2015/120883
- DE-A1-102015 219 282
- US-A1- 2009 315 758
- US-A1- 2014 208 845

## Beschreibung

### Gebiet der Erfindung

Die Erfindung betrifft die Füllstandmessung und die Erfassung der Topologie einer Füllgutoberfläche. Insbesondere betrifft die Erfindung ein Füllstandmessgerät mit einem ersten Radarchip und einem mit dem ersten Radarchip synchronisierten zweiten Radarchip, ein Verfahren zum Messen eines Füllstands oder der Oberfläche eines Füllguts in einem Behälter, ein Programmelement und ein computerlesbares Medium.

### Hintergrund

Füllstandmessung mit Radar ist heute Stand der Technik. Im Gegensatz zu vielen anderen Bereichen wurde der Durchbruch für die Radartechnik in der Füllstandmessung erst möglich, nachdem extrem kleine Reflexionssignale von der Elektronik der Messgeräte erfasst und verarbeitet werden konnten.

Moderne Füllstandmessgeräte und Topologiemessgeräte zeichnen sich nicht nur durch eine hohe Sendefrequenz, die typischerweise im Bereich von 75 bis 85 GHz liegen kann, aus, sondern sind auch in der Lage, Amplitudenunterschiede des reflektierten Signals in einem Bereich bis zu 120 dB sicher zu verarbeiten.

Zur Erzeugung und Verarbeitung der hochfrequenten Sendesignale im Bereich von 79 GHz kann ein monolithisch aufgebauter integrierter Mikrowellenschaltkreis (MMIC) vorgesehen sein. Dieser Baustein kann eine Vielzahl an Sende- und Empfangskanälen aufweisen, die in dieser Anmeldung auch als Radarkanäle bezeichnet werden, so dass die Füllgutoberfläche abgescannt werden kann.

Je genauer die Füllgutoberfläche abgescannt werden soll, desto mehr Sende- und Empfangskanäle sind erforderlich, um eine hochqualitative Abbildung zu erzielen, was mit entsprechend hohem Hardwareaufwand und Energiebedarf einhergeht.

EP 3 171 138 A1 beschreibt eine Antennenvorrichtung zur Füllstandmessung mit mehreren Sendekanälen, die jeweils eine Frequenzumsetzeinrichtung aufweisen, um eine Grundfrequenz des Sendesignals auf die jeweilige Sendefrenquenz umzusetzen.

### Zusammenfassung der Erfindung

Es ist eine Aufgabe der Erfindung, ein Füllstandmessgerät zum Messen eines Füllstands eines Mediums oder der Topologie eines Mediums in einem Behälter bereitzustellen.

Diese Aufgabe wird durch die Gegenstände der unabhängigen Patentansprüche gelöst. Weiterbildungen der Erfindung ergeben sich aus den Unteransprüchen und der folgenden Beschreibung.

Ein erster Aspekt betrifft ein Füllstandmessgerät mit einem ersten Radarchip und einem mit dem ersten Radarchip synchronisierten zweiten Radarchip. Sowohl der erste Radarchip als auch der zweite Radarchip weisen einen oder mehrere Sendekanäle zum Abstrahlen jeweils eines Sendesignals in Richtung der Füllgutoberfläche und einen oder mehrere Empfangskanäle zum Empfangen der an der Füllgutoberfläche reflektierten Sendesignale auf.

Die Radarchips können integrierte Mikrowellenschaltkreise sein, welche auch als Radarsystem on Chip bezeichnet werden können. Ein solches Radarsystem on Chip (RSoC) ist ein hochintegrierter Mikrowellenschaltkreis (MMIC) mit Schaltungskomponenten für digitale Funktionen, welches, gemäß einer Ausführungsform, in der Lage ist, die komplette Funktionalität eines herkömmlichen Radarsystems für die Signalerzeugung, die Signalverarbeitung und die Überführung der Empfangssignale (reflektierte Sendesignale) in eine digitale Darstellung auf einem einzigen Radarchip zu integrieren.

Jeder der Sendekanäle kann eingerichtet sein, ein hochfrequentes Sendesignal mit einer Frequenz im Gigahertzbereich zu erzeugen, beispielsweise im Bereich von 75 bis 85 GHz oder darüber. Die Sendekanäle können als kombinierte Sende-/Empfangskanäle eingerichtet sein.

Es ist eine Auswerteschaltung vorgesehen, die über eine Datenleitungsanordnung mit dem ersten und dem zweiten Radarchip verbunden ist, und welche eingerichtet ist, den Füllstand des Mediums in dem Behälter und/oder die Topologie der Füllgutoberfläche des Mediums in dem Behälter aus den von dem ersten und dem zweiten Radarchip erfassten Sendesignalen mit hoher Genauigkeit und möglichst geringem Energiebedarf zu berechnen.

Darüber hinaus ist eine Taktleitungsanordnung vorgesehen, welche den ersten Radarchip mit der Auswerteschaltung verbindet und zur Bereitstellung eines gemeinsamen Taktsignals zur Auswertung der Empfangssignale des ersten Radarchips und der Empfangssignale des zweiten Radarchips an die Auswerteschaltung eingerichtet ist.

Ein weiterer Aspekt betrifft ein Füllstandmessgerät mit einem oder mehreren Radarchips und einer Taktgeberschaltung, welche zumindest einen der Radarchips mit der Auswerteschaltung verbindet und sowohl den Radarchip und die Auswerteschaltung mit einem gemeinsamen Taktsignal versorgt, um den Radarchip und die Auswerteschaltung zu synchronisieren. Des Weiteren ist eine Taktleitungsanordnung vorgesehen sowie eine oder mehrere Datenleitungsanordnungen, über welche die Messdaten des Radarchips an die Auswerteschaltung übertragen werden können. Sämtliche Leitungen (Daten und Takt) weisen im Wesentlichen dieselbe Länge auf.

Eine Ausführungsform betrifft ein Füllstandmessgerät zur Füllstand- und/oder Topologieerfassung, welches zumindest N ≥ 2 (N ist eine ganze Zahl) hochintegrierte Radarchips aufweist, wobei diese zumindest N Radarchips mit zumindest einer Auswerteschaltung oder Auswerteeinheit, beispielsweise in Form eines Prozessors, über zumindest N serielle Datenleitungen zur Übertragung digitaler Echosignale verbunden sind, wobei die Radarchips zusätzlich mit M < N (M ist eine ganze Zahl) Taktleitungen, die im Folgenden auch als Taktleitungsanordnung bezeichnet sind, zur Übertragung serieller Taktsignale mit der zumindest einen Auswerteleitung verbunden sind.

Gemäß einer weiteren Ausführungsform weist das Füllstandmessgerät eine Taktgeberschaltung auf, die eingerichtet ist zur Bereitstellung eines gemeinsamen Taktsignals an den ersten und den zweiten Radarchip, um die beiden Radarchips zu synchronisieren. In diesem Falle sind weniger Taktgeber als Radarchips vorgesehen, was Schaltungsaufwand reduziert.

Gemäß einer weiteren Ausführungsform weist die Taktgeberschaltung einen einzelnen Taktgeber oder Oszillator für sowohl den ersten als auch den zweiten Radarchip auf.

Gemäß einer weiteren Ausführungsform weist das Füllstandmessgerät eine Vielzahl an Radarchips auf, beispielsweise acht oder mehr Radarchips, wobei nicht für jeden Radarchip eine eigene Taktleitungsanordnung vorgesehen ist, die den Radarchip mit der Auswerteschaltung verbindet, um der Auswerteschaltung ein Taktsignal des Radarchips bereitzustellen. Vielmehr ist dieser Radarchip mit einem anderen Radarchip des Füllstandmessgeräts synchronisiert, so dass zur Signalverarbeitung unter Auswertung der Messsignale dieses Chips das Taktsignal des anderen Chips verwendet werden kann.

Auch hierdurch wird Schaltungsaufwand gespart.

Gemäß einer weiteren Ausführungsform sind weniger Taktgeberschaltungen als Radarchips vorgesehen, wie bereits oben angesprochen.

Gemäß einer weiteren Ausführungsform weist die Taktleitungsanordnung, welche den ersten Radarchip mit der Auswerteschaltung verbindet, im Wesentlichen dieselbe Länge auf wie die Datenleitungsanordnung, die ebenfalls den Radarchip mit der Auswerteschaltung verbindet und über welche die Messdaten des Chips an die Auswerteschaltung übermittelt werden.

Im Kontext der vorliegenden Offenbarung mögen zwei Leitungsanordnungen dieselbe Länge oder im Wesentlichen dieselbe Länge aufweisen, wenn die über eine erste Leitungsanordnung übertragenen Signale mit einer vorgebbaren Maximalfrequenz und die über eine zweite Leitungsanordnung übertragenen Signale mit einer vorgebbaren Maximalfrequenz am Ende der jeweiligen Übertragungsstrecke einen Zeitversatz kleiner gleich der halben Periodendauer der größten übertragenen Signalfrequenz aufweisen.

Auf diese Weise ist es möglich, dass eine Taktgeberschaltung eingesetzt wird, die ein gemeinsames Taktsignal an den ersten Radarchip und die Auswerteschaltung bereitstellt, um den ersten Radarchip und die Auswerteschaltung zu synchronisieren. Auf diese Weise lässt sich der Schaltungsaufwand reduzieren.

Gemäß einer weiteren Ausführungsform ist das Füllstandmessgerät als Füllstandmessgerät ausgeführt, das ein freqenzmoduliertes Dauerstrichsignal (FMCW) zur Messung verwendet, wobei jeder Messzyklus einen Frequenzsweep umfasst, der beispielsweise eine Startfrequenz von 75 GHz aufweist und eine Maximalfrequenz von 85 GHz.

Gemäß einer weiteren Ausführungsform weist sowohl der erste als auch der zweite Radarchip einen integrierten Analog-Digital-Wandler auf, eingerichtet zum Umwandeln des Empfangssignals in ein digitalisiertes Zwischenfrequenzsignal, welches auf ein oder mehrere an der Füllgutoberfläche reflektierte Sendesignale zurückzuführen ist.

Gemäß einer weiteren Ausführungsform weisen zumindest zwei der Sendekanäle jeweils eine Antenne auf, die daran angeschlossen ist.

Gemäß einer weiteren Ausführungsform basieren der erste und der zweite Radarchip jeweils auf BiCMOS-Technologie. Gemäß einer weiteren Ausführungsform der Erfindung basieren die Radarchips auf Siliziumgermanium SiGe-Technologie. Gemäß einer weiteren Ausführungsform der Erfindung basieren die Radarchips auf HF-CMOS-Technologie und weisen somit Hochfrequenzschaltungsteile für Frequenzen von 75 GHz und darüber auf.

Gemäß einer weiteren Ausführungsform ist das Füllstandmessgerät zur Erfassung der Topologie eines Mediums in einem Behälter ausgeführt, ist also in der Lage, die Füllgutoberfläche durch digitale Strahlumformung abzuscannen.

Ein weiterer Aspekt der Erfindung betrifft ein Verfahren zum Messen eines Füllstands eines Mediums in einem Behälter oder einer Topologie einer Oberfläche des Mediums in einem Behälter, bei dem ein erster Radarchip und ein zweiter Radarchip miteinander synchronisiert werden. Beide Chips erzeugen hochfrequente Sendesignale mit jeweils zumindest einem von mehreren Sendekanälen und empfangen über einen oder mehrere Empfangskanäle die an der Füllgutoberfläche reflektierten Sendesignale. Diese Signale können in digitale Zwischenfrequenzsignale umgewandelt werden. Für die Signalverarbeitung wird ein gemeinsames Taktsignal durch den ersten Radarchip zur Auswertung der Empfangssignale beider Chips an eine Auswerteschaltung bereitgestellt und diese berechnet dann den Füllstand und/oder die Topologie des Mediums in dem Behälter aus den von dem ersten und/oder dem zweiten Radarchip erfassten Sendesignalen.

Ein weiterer Aspekt betrifft ein Programmelement, das, wenn es auf einem Prozessor eines Füllstandmessgeräts ausgeführt wird, das Füllstandmessgerät anleitet, die oben und im Folgenden beschriebenen Schritte durchzuführen.

Ein weiterer Aspekt betrifft ein computerlesbares Medium, auf dem das oben beschriebene Programmelement gespeichert ist.

Die im Folgenden im Hinblick auf das Füllstandmessgerät beschriebenen Eigenschaften können auch als Verfahrensschritte implementiert sein. Umgekehrt können sämtliche im Folgenden beschriebenen Verfahrensschritte in dem Füllstandmessgerät implementiert sein.

Im Folgenden werden mit Verweis auf die Figuren Ausführungsformen der Erfindung beschrieben. Werden in der folgenden Figurenbeschreibung dieselben Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt ein Füllstandmessgerät, das an einem Behälter installiert ist, um die Topologie der Oberfläche eines Füllguts in dem Behälter zu erfassen.
Fig. 2 zeigt ein weiteres Füllstandmessgerät.
Fig. 3 zeigt ein weiteres Füllstandmessgerät.
Fig. 4 zeigt ein weiteres Füllstandmessgerät.
Fig. 5 zeigt ein weiteres Füllstandmessgerät.
Fig. 6 zeigt ein weiteres Füllstandmessgerät.
Fig. 7 zeigt ein Flussdiagramm des Verfahrens gemäß einer Ausführungsform der Erfindung.

### Detaillierte Beschreibung von Ausführungsformen

Die Topologie eines Füllguts erfassende Füllstandmessgeräte führen in vielen Bereichen der Schüttgutmessung zu deutlich verbesserten Messergebnissen, und werden daher in zunehmendem Maße zur sicheren und genauen Überwachung von Schüttgütern verwendet. Einhergehend mit neueren Entwicklungen werden darüber hinaus hoch integrierte Radarchips verfügbar, mit Hilfe derer der Systemaufbau abbildender Radarsensoren im Bereich der Füllstandmessung vereinfacht und preisgünstig gestaltet werden kann.

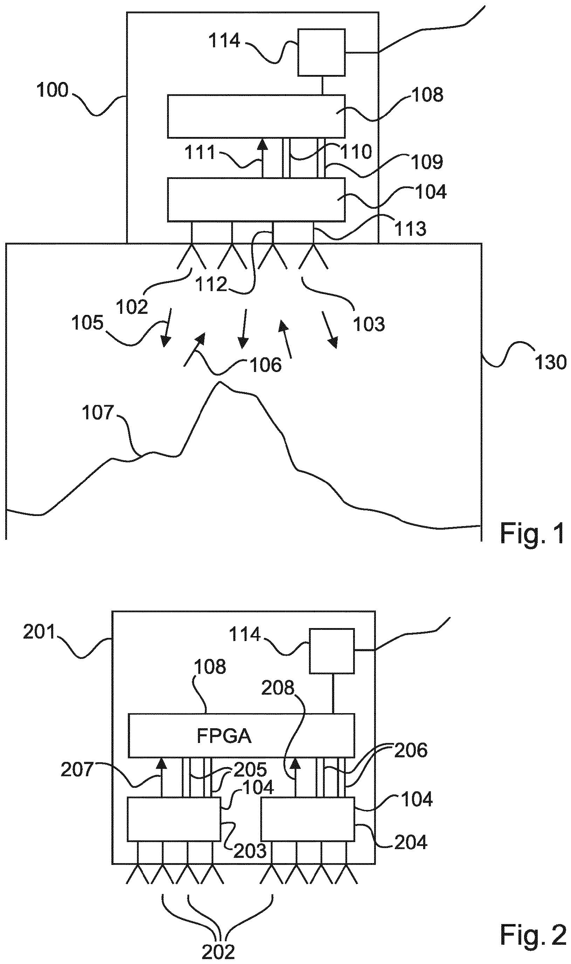

Figur 1 zeigt eine erste Realisierung eines die Topologie erfassenden Füllstandmessgerätes 101 mit einem Radarchip, das in einem Behälter 130 installiert ist. Der Radarchip 104 erzeugt mit Hilfe von im Chip 104 integrierten Schaltungskomponenten (PLL, VCO, Verstärker) ein Radarsignal 105, welches über zumindest eine mit dem Chip verbundene Sendeantenne 102 in Richtung einer Füllgutoberfläche 107 abgestrahlt wird. Das Radarsignal 105 wird von dieser reflektiert 106, und von der zumindest einen Empfangsantenne 103 wieder an den Radarchip 104 weitergeleitet. Im Radarchip wird das Signal unter Verwendung bestimmter Schaltungskomponenten (Mischer, Verstärker, Koppler) zunächst in einen niederfrequenten Bereich umgesetzt, und anschließend mit Hilfe eines oder auch mehrerer im Chip 104 integrierten Analog-Digital-Wandlern in eine digitale Darstellung überführt.

Da im Umfeld der Füllstandmessung stets von einer begrenzten Energiesituation im Sensor 101 ausgegangen werden muss, findet im Radarchip 104 keine Speicherung der Daten statt, da die Speicherinhalte beim Deaktivieren des Chips nach erfolgter Messung ehedem verloren gehen würden. Aktuelle Systemkonzepte sehen daher vor, die erfassten Daten der im Chip 104 integrierten Analog-Digital-Wandler in Echtzeit an eine externe Auswerteeinheit 108 zu übertragen. Beispielhafte Radarchips 104 können für den Automobilbereich eingesetzt werden, was dazu führt, dass sehr schnell aufeinanderfolgende Messzyklen zur Überwachung sich schnell bewegender Objekte vorgesehen sind.

Die Analog-Digital-Wandler werden daher verhältnismäßig schnell getaktet (typ. 10 .. 100 MHz). Um die erfassten Digitalwerte mit dieser Geschwindigkeit an eine externe Signalauswerteeinheit übergeben zu können, kommen daher regelmäßig schnelle serielle Datenübertragungsleitungen 109, 110 in Kombination mit einer zusätzlichen Datentaktleitung 111 zum Einsatz. Zur Erhöhung der Störfestigkeit können sowohl die Datenleitungen 109, 110 als auch die Taktleitung 111 differentiell vorgesehen sein.

Im Beispiel der Figur 1 weist der Radarchip 104 genau zwei Empfangskanäle 112, 113 auf. Die Daten dieser Kanäle werden an die Auswerteeinheit 108 über jeweils eine Datenleitung 109, 110 übertragen. An dieser Stelle kann sowohl ein SPI Standard, ein LVDS Standard oder auch ein anderer serieller Übertragungsstandard zum Einsatz kommen. Die zusätzliche Taktleitung 111 ermöglicht es der Auswerteeinheit 108, den seriellen Datenstrom korrekt zu interpretieren, und die übermittelten Daten im Speicher der Auswerteeinheit 108 abzulegen. Das Gesamtsystem wird von einer Netzteileinheit 114 mit Energie versorgt. Als Auswerteeinheit 108 kommen spezialisierte Prozessoren in Frage, welche die passenden Schnittstellen (Takteingang, mehrere SPI oder LVDS Eingänge) zum Anschluss eines Radarchips 104 aufweisen. Es ist aber auch möglich, die Auswerteeinheit innerhalb eines entsprechend programmierten FPGA's oder eines ASIC abzubilden.

Im Gegensatz zu Detektionsanwendungen im Automobilbereich liegt der Schwerpunkt der Entwicklungen im Bereich der Füllstandmessung auf einer hohen Abbildungsqualität kontinuierlich verteilter Einzelreflektoren einer Schüttgutoberfläche. Es ist daher Gegenstand aktueller Forschungsbemühungen, die Abbildungsqualität der Topologie erfassenden Schüttgutmessgeräte 101 zu erhöhen. Möglich wird dies durch eine Vergrößerung der Anzahl verwendeter Antennen, wie sie in Figur 2 zu sehen ist. Das Messgerät 201 weist mehrere Radarchips 104 auf, welche ihrerseits mit einer Vielzahl an Sende- und Empfangsantennen 202 verbunden sind. Während der Erfassung der Messdaten ist es notwendig, die von den Radarchips 203, 204 erfassten Daten in Echtzeit in die Auswerteeinheit 108 einzulesen. Die von den Radarchips bereitgestellten seriellen Datenströme 205, 206 müssen folglich mit mehreren Eingängen der Auswerteeinheit verbunden sein. Zusätzlich liefert jeder der Chips 203, 204 ein zum seriellen Datenstrom gehörendes Taktsignal 207, 208, welches ebenfalls von der Auswerteeinheit 108 verarbeitet werden muss.

Der zuvor genannte Systemaufbau kann grundsätzlich auch dazu verwendet werden, Radarsysteme mit einer Vielzahl an Radarchips 104, 203, 204 zu realisieren. Es wird jedoch sehr schnell deutlich, dass die Anzahl an Leitungen zur Übertragung der Echodaten von den Radarchips zur Auswerteeinheit mit einer Erhöhung der Anzahl an Radarchips massiv steigt. Bisher verfügbare Prozessoren 108 zur Anbindung externer Radarchips ermöglichen lediglich Systemaufbauten mit bis zu zwei Radarchips 203, 204.

Es ist somit wünschenswert, eine Systemarchitektur zu erreichen, mit Hilfe derer eine Vielzahl an Radarchips, beispielsweise 8 Radarchips, an eine Auswerteeinheit 108 angebunden werden kann.

Eine erste Lösung mag darin gesehen werden, die Auswerteeinheit in einem entsprechend groß gewählten FPGA 108 zu implementieren. Die Verwaltung einer Vielzahl an seriellen High-Speed-Schnittstellen ist bei Vorhandensein einer ausreichenden Zahl an Logikzellen möglich. Zusätzlich muss das FPGA jedoch genügend IO-Pins und/oder PLL's zur Taktsynchronisierung aufweisen, um die Signale der Vielzahl an Takt- und Datenleitungen 205, 206, 207, 208 von der Vielzahl an Radarchips 203, 204 einzulesen. Im vorliegenden, beispielhaften Maximalausbau mit 8 Radarchips mit je 4 Empfangskanälen müssen somit 32 differentielle Datenleitungen und 8 differentielle Taktleitungen angeschlossen werden können. Das FPGA muss also mindestens 80 IO-Pins zur freien Programmierung aufweisen, um die Daten der Chips einzulesen. Eine Verwendung preisgünstiger Chips ist somit nicht möglich, was zu entsprechend höheren Systemkosten führen kann.

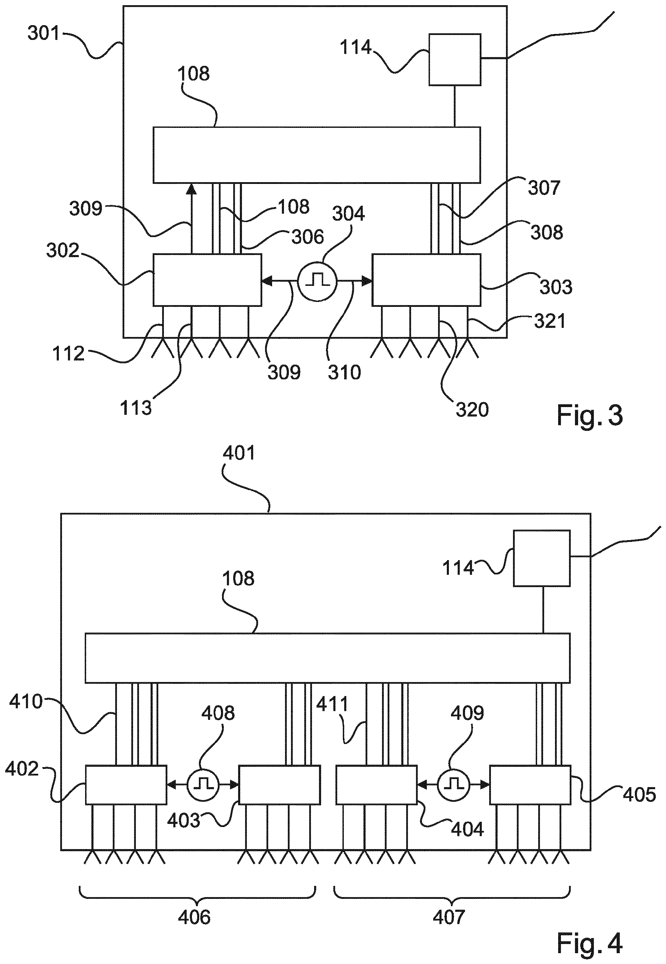

Figur 3 zeigt daher eine zweite Lösung des Problems. Der Grundgedanke an dieser Lösung mag darin gesehen werden, die im System 301 verwendeten Radarchips 302, 303 über einen gemeinsamen Systemtakt 304 zu synchronisieren. Die digitalen Baugruppen innerhalb der Radarchips und hier insbesondere die Analog-Digital-Wandler arbeiten folglich vollständig synchron, weshalb auch der von diesen gelieferte Datenstrom 305, 306, 307, 308 vollständig synchronisiert am Eingang der Auswerteeinheit 108 ansteht. Zur Interpretation des synchronen Datenstroms genügt es daher, den seriellen Datentakt 309 eines einzigen Radarchips 302 zur Auswerteeinheit zu übertragen. Es sei an dieser Stelle ergänzt, dass der gemeinsame Systemtakt der Radarchips 302, 303 erfindungsgemäß im Wesentlichen synchron an den Eingängen der Radarchips 302, 303 anliegen muss. Es kann daher notwendig sein, die Leitungen 309, 310 derart auszugestalten, dass diese im Wesentlichen die gleiche elektrische Laufzeit oder Länge aufweisen. Es kann auch notwendig sein, die Signale 309, 310 zunächst gemeinsam zu führen, und auf der Strecke zwischen Mutteroszillator 304 und Radarchip 302, 303 aufzuteilen. Es kann notwendig sein, den Takt durch Einfügen eines Verstärkerelementes zwischen Mutteroszillator 304 und Radarchip 302, 303 zu verstärken oder pegelmäßig anzupassen, beispielsweise durch ein entsprechend ausgelegtes Widerstandsnetzwerk. Es kann auch vorgesehen sein, die seriellen Signalleitungen 305, 306, 307, 308, 309 derart zu verlegen, dass diese eine im Wesentlichen identische elektrische Signallaufzeit aufweisen.

Es kann auch vorgesehen sein, dass der Mutteroszillator 304 innerhalb eines ersten Radarchips 302 enthalten ist. Es kann vorgesehen sein, dass dieser erste Radarchip einen vom Mutteroszillator 304 erzeugten Systemtakt oder daraus abgeleitete Takte den anderen Radarchips 303 zur Verfügung stellt.

Bei größeren Radarsystemen kann die Verteilung eines einzigen Mutteroszillatorsignals zu Problemen im Layout führen. Figur 4 zeigt daher eine weitere erfindungsgemäße Ausgestaltung eines die Topologie erfassenden Füllstandmessgerätes 401. Die Radarchips 402, 403, 404, 405 lassen sich auch in mehrere Untergruppen 406, 407 unterteilen. In jeder dieser Untergruppen müssen die zugehörigen Radarchips durch einen gemeinsamen Oszillator 408, 409 synchronisiert werden. Zum Anbinden der Radarchips an die gemeinsame Auswerteeinheit 108 genügt es dann, je Untergruppe 406, 407 zumindest einen seriellen High-Speed-Takt 410, 411 zur Auswerteeinheit zu übertragen.

Es kann auch vorgesehen sein, dass zumindest einer der Mutteroszillatoren 408, 409 innerhalb eines ersten Radarchips 402, 404 enthalten ist. Es kann vorgesehen sein, dass dieser erste Radarchip einen vom Mutteroszillator 408, 409 erzeugten Systemtakt oder daraus abgeleitete Takte den anderen Radarchips 403. 405 zur Verfügung stellt.

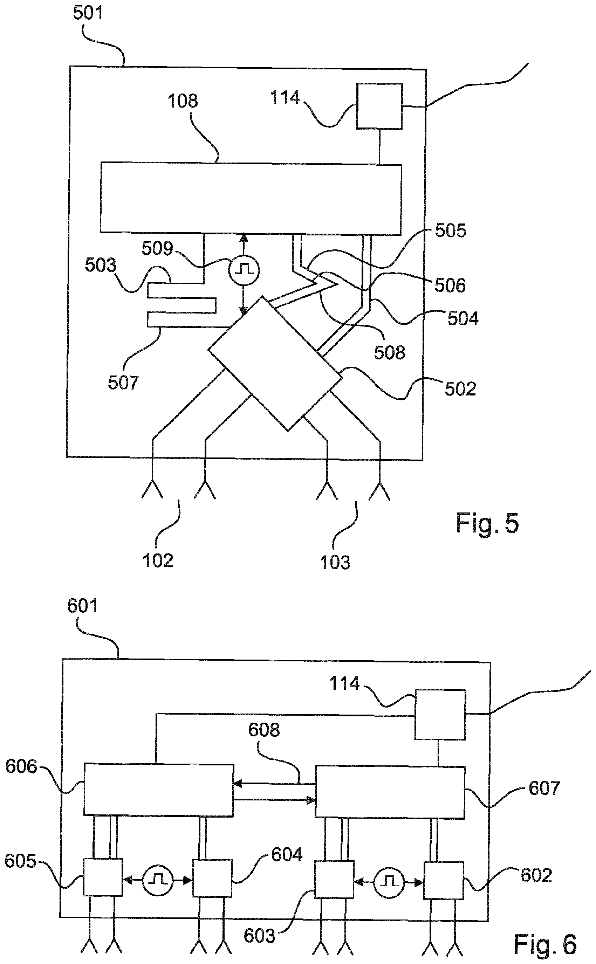

Figur 5 zeigt einen weiteren Aufbau eines Sensors. Der Chip 502 unterscheidet sich von den bislang betrachteten Chips 104 durch eine veränderte Lage der Anschlüsse für die seriellen High-Speed-Daten. Es ist hierbei zu beachten, dass die vom Radarchip ausgesendeten seriellen Daten und Taktsignale unter Berücksichtigung der Datentaktrate im Wesentlichen synchron an der Auswerteeinheit 108 empfangen werden können. Im vorliegenden Beispiel wird daher die Datenleitung 503 mit entsprechenden Verlängerungsstrukturen 507 derart verlängert, dass die Laufzeit der darüber übertragenen Taktsignale im Wesentlichen identisch der Laufzeit der Datensignale auf den Datenleitungen 504, 505, 506 ist. Es kann auch vorgesehen sein, dass die Datenleitungen entsprechende Laufzeitkompensationswege 508 aufweisen. Es ist ferner vorgesehen, dass bei differentiellen Signalen die entsprechenden Leitungsteile 505, 506 im Wesentlichen die gleiche elektrische Länge aufweisen.

Figur 5 zeigt darüber hinaus eine EVM technisch vorteilhafte Ergänzung. Es kann vorgesehen sein, die Auswerteeinheit 108 und den zumindest einen Radarchip 502 über einen gemeinsamen Taktgenerator 509 zu versorgen, und die Verarbeitungseinheiten insoweit zu synchronisieren. Der Taktgenerator 509 kann als separates Bauteil, innerhalb der Auswerteeinheit 108 oder innerhalb eines Radarchips 502 implementiert sein.

Figur 6 zeigt eine weitere Alternative zur Auswertung der Signale mehrerer Radarchips 602, 603, 604, 605. Die Radarchips 602, 603 sind hierbei an eine erste Auswerteeinheit 607, beispielsweise ein erstes FPGA angeschlossen. Die Radarchips 604, 605 sind an eine zweite Auswerteeinheit 606 angeschlossen. Es kann vorgesehen sein, dass die erste Auswerteeinheit 607 als Mastereinheit konfiguriert ist, und insbesondere die Steuerung des Betriebsablaufes des Messgerätes 601 implementiert. Es kann vorgesehen sein, dass die erste Auswerteeinheit 607 und die zweite Auswerteeinheit 606 über Kommunikationsleitungen 608 miteinander verbunden sind. Es ist insbesondere vorgesehen, dass die Auswerteeinheit 607 die Rohdaten und/oder vorverarbeitete Daten von der Auswerteeinheit 606 anfordert, um diese in Verbindung mit den selbst erfassten Daten zu verarbeiten. Es kann vorgesehen sein, dass die Auswerteeinheit 607 die Auswerteeinheit 606 und/oder zumindest einen der Radarchips 602, 603, 604, 605 nach Abschluss eines Messdatenerfassungszyklus in einen energiesparenden Zustand versetzt. Die Auswerteeinheit 607 und die anderen Komponenten können hierbei über nicht dargestellte Steuerleitungen miteinander verbunden sein.

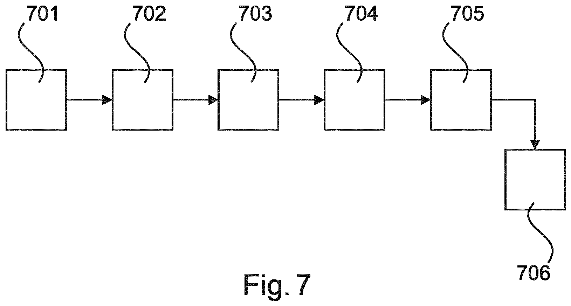

Fig. 7 zeigt ein Flussdiagramm eines Verfahrens gemäß einer Ausführungsform der Erfindung. In Schritt 701 werden zwei Radarchips miteinander synchronisiert. Die Radarchips senden in Schritt 702 Sendesignale in Richtung Füllgutoberfläche, welche dort reflektiert werden und in Schritt 703 von den Sende-/Empfangsantennen der Radarchips detektiert werden. In Schritt 704 stellt einer der Chips ein gemeinsames Taktsignal an eine Auswerteschaltung bereit und in Schritt 705 werden die von den Chips erzeugten Messsignale an die Auswerteschaltung übertragen, welche in Schritt 706 daraus den Füllstand oder die Topologie des Mediums in dem Behälter berechnet.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmessgerät (301), aufweisend:
einen ersten Radarchip (302) und einen mit dem ersten Radarchip synchronisierten zweiten Radarchip (303), welche jeweils einen oder mehrere Sendekanäle (112, 113; 320, 321) zum Abstrahlen jeweils eines Sendesignals und einen oder mehrere Empfangskanäle (112, 113; 320, 321) zum Empfangen jeweils der an der Füllgutoberfläche reflektierten Sendesignale aufweisen;
eine Auswerteschaltung (108), die über eine Datenleitungsanordnung (305, 306, 307, 308) mit dem ersten und zweiten Radarchip verbunden ist, eingerichtet zur Berechnung eines Füllstands und/oder einer Topologie der Füllgutoberfläche eines Mediums in einem Behälter (130) aus den von dem ersten und zweiten Radarchip erfassten Sendesignalen;
eine Taktleitungsanordnung (309), welche den ersten Radarchip mit der Auswerteschaltung verbindet und welche zur Bereitstellung eines gemeinsamen Taktsignals zur Auswertung der Empfangssignale des ersten Radarchips und der Empfangssignale des zweiten Radarchips an die Auswerteschaltung eingerichtet ist;
wobei das Füllstandmessgerät (100) eine Vielzahl an Radarchips (302, 303) aufweist;
wobei nicht für jeden Radarchip eine Taktleitungsanordnung (309) vorgesehen ist, die den Radarchip mit der Auswerteschaltung (108) verbindet, um der Auswerteschaltung (108) ein Taktsignal des Radarchips bereitzustellen, wobei jeder Radarchip ohne Taktleitungsanordnung mit einem Radarchip bei dem eine Taktleitungsanordnung vorgesehen ist, synchronisiert ist.

2. Füllstandmessgerät (301) nach Anspruch 1, weiter aufweisend:
eine Taktgeberschaltung (304), eingerichtet zur Bereitstellung eines gemeinsamen Taktsignals an den ersten und den zweiten Radarchip (302,303), um die beiden Radarchips zu synchronisieren.

3. Füllstandmessgerät (301) nach Anspruch 2,
wobei die Taktgeberschaltung (304) einen einzelnen Taktgeber für sowohl den ersten als auch den zweiten Radarchip (302, 303) aufweist.

4. Füllstandmessgerät (301) nach einem der vorhergehenden Ansprüche,
wobei das Füllstandmessgerät (100) eine Vielzahl an Radarchips (302, 303) aufweist;
wobei weiniger Taktgeberschaltungen (304) als Radarchips vorgesehen sind.

5. Füllstandmessgerät (301) nach einem der vorhergehenden Ansprüche,
wobei die Taktleitungsanordnung (309), welche den ersten Radarchip (302) mit der Auswerteschaltung verbindet, dieselbe Länge aufweist, wie die Datenleitungsanordnung (305).

6. Füllstandmessgerät (301) nach Anspruch 5, weiter aufweisend:
eine Taktgeberschaltung (509), eingerichtet zur Bereitstellung eines gemeinsamen Taktsignals an den ersten Radarchip (302, 502) und die Auswerteschaltung (108), um den ersten Radarchip und die Auswerteschaltung zu synchronisieren.

7. Füllstandmessgerät (301) nach einem der vorhergehenden Ansprüche,
wobei das Füllstandmessgerät (100) als FMCW Füllstandmessgerät ausgeführt ist.

8. Füllstandmessgerät (301) nach einem der vorhergehenden Ansprüche,
wobei der erste und der zweite Radarchip (302, 303) jeweils zumindest einen integrierten Analog-Digitalwandler aufweisen, eingerichtet zum Umwandeln des Empfangssignals in ein digitalisiertes Zwischenfrequenzsignal.

9. Füllstandmessgerät (301) nach einem der vorhergehenden Ansprüche, eingerichtet zur Erfassung der Topologie eines Mediums in einem Behälter.

10. Verfahren zum Messen eines Füllstands eines Mediums in einem Behälter und/oder einer Topologie einer Oberfläche des Mediums mit einem Füllstandmessgerät, aufweisend die Schritte:
Synchronisieren eines ersten Radarchips und eines zweiten Radarchips;
Erzeugen eines hochfrequenten Sendesignals mit jeweils zumindest einem von mehreren Sendekanälen des ersten Radarchips und des zweiten Radarchips;
Empfangen der an der Füllgutoberfläche reflektierten Sendesignale mit mehreren Empfangskanälen des ersten Radarchips und des zweiten Radarchips;
Bereitstellen eines gemeinsamen Taktsignals durch den ersten Radarchip zur Auswertung der Empfangssignale des ersten Radarchips und der Empfangssignale des zweiten Radarchips an die Auswerteschaltung;
Berechnen des Füllstands und/oder der Topologie des Mediums in dem Behälter aus den von dem ersten und zweiten Radarchip erfassten Sendesignalen;
wobei das Füllstandmessgerät (100) eine Vielzahl an Radarchips (302, 303) aufweist;
wobei nicht für jeden Radarchip eine Taktleitungsanordnung (309) vorgesehen ist, die den Radarchip mit der Auswerteschaltung (108) verbindet, um der Auswerteschaltung (108) ein Taktsignal des Radarchips bereitzustellen, wobei jeder Radarchip ohne Taktleitungsanordnung mit einem Radarchip bei dem eine Taktleitungsanordnung vorgesehen ist, synchronisiert ist.

11. Programmelement, das, wenn es auf einem Prozessor (109) eines Füllstandmessgeräts (301) ausgeführt wird, das Füllstandmessgerät anleitet, die Schritte nach Anspruch 10 durchzuführen.

12. Computerlesbares Medium, auf dem ein Programmelement nach Anspruch 11 gespeichert ist.

## Claims

1. Fill level measurement device (301) comprising:
a first radar chip (302) and a second radar chip (303) that is synchronised with the first radar chip, which radar chips each comprise one or more transmission channels (112, 113; 320, 321), each configured to radiate a transmission signal, and one or more reception channels (112, 113; 320, 321), each configured to receive the transmission signals reflected at the filling material surface;
an evaluation circuit (108) that is connected to the first and second radar chips by means of a data line assembly (305, 306, 307, 308) and is configured to calculate a fill level and/or a topology of the filling material surface of a medium in a container (130) from the transmission signals received by the first and second radar chips;
a clock line assembly (309) that connects the first radar chip to the evaluation circuit and that is configured to provide the evaluation circuit with a common clock signal for evaluating the reception signals of the first radar chip and the reception signals of the second radar chip;
wherein the fill level measurement device (100) comprises a plurality of radar chips (302, 303);
wherein a clock line assembly (309) connecting the radar chip to the evaluation circuit (108) is not provided for every radar chip, in order to provide the evaluation circuit (108) with a clock signal of the radar chip;
wherein each radar chip without clock line assembly is synchronised with the radar chip, for which a clock line assembly is provided.

2. Fill level measurement device (301) according to claim 1, further comprising:
a clock circuit (304) that is configured to provide a common clock signal to the first and the second radar chips (302, 303) in order to synchronise the two radar chips.

3. Fill level measurement device (301) according to claim 2,
wherein the clock circuit (304) comprises a single clock for both the first and the second radar chip (302, 303).

4. Fill level measurement device (301) according to any of the preceding claims, wherein the fill level measurement device (100) comprises a plurality of radar chips (302, 303);
wherein fewer clock circuits (304) than radar chips are provided.

5. Fill level measurement device (301) according to any of the preceding claims, wherein the clock line assembly (309) that connects the first radar chip (302) to the evaluation circuit has the same length as the data line assembly (305).

6. Fill level measurement device (301) according to claim 5, further comprising:
a clock circuit (509) that is configured to provide a common clock signal to the first radar chip (302, 502) and to the evaluation circuit (108) in order to synchronise the first radar chip and the evaluation circuit.

7. Fill level measurement device (301) according to any of the preceding claims,
wherein the fill level measurement device (100) is configured as an FMCW fill level measurement device.

8. Fill level measurement device (301) according to any of the preceding claims, wherein the first and the second radar chips (302, 303) each comprise at least one integrated analogue-to-digital converter that is configured to convert the reception signal into a digitised intermediate frequency signal.

9. Fill level measurement device (301) according to any of the preceding claims, configured to record the topology of a medium in a container.

10. Method for measuring a fill level of a medium in a container and/or a topology of a surface of the medium by means of a fill level measurement device, comprising the steps of:
synchronising a first radar chip and a second radar chip;
generating a high-frequency transmission signal by means of at least one of a plurality of transmission channels of the first radar chip and of the second radar;
receiving the transmission signal reflected at the filling material surface by means of a plurality of reception channels of the first radar chip and of the second radar chip;
providing the evaluation circuit with a common clock signal, by means of the first radar chip, in order to evaluate the reception signals received by the first radar chip and the reception signals received by the second radar chip;
calculating the fill level and/or the topology of the medium in the container from the transmission signals received by the first and second radar chips;
wherein the fill level measurement device (100) comprises a plurality of radar chips (302, 303);
wherein a clock line assembly (309) connecting the radar chip to the evaluation circuit (108) is not provided for every radar chip, in order to provide the evaluation circuit (108) with a clock signal of the radar chip;
wherein each radar chip without clock line assembly is synchronised with the radar chip, for which a clock line assembly is provided.

11. Program element which, when executed on a processor (109) of a fill level measurement device (301), instructs the fill level measurement device to carry out the steps according to claim 10.

12. Computer-readable medium, on which a program element according to claim 11 is stored.

## Revendications

1. Appareil de mesure de niveau de remplissage (301), présentant :
une première puce radar (302) et une deuxième puce radar (303) synchronisée avec la première puce radar, lesquelles présentent chacune un ou plusieurs canaux d'émission (112, 113 ; 320, 321) pour rayonner un signal d'émission respectif et un ou plusieurs canaux de réception (112, 113 ; 320, 321) pour recevoir les signaux d'émission respectifs réfléchis sur la surface de produit de remplissage ;
un circuit d'évaluation (108), qui est relié aux première et deuxième puces radar par l'intermédiaire d'un agencement de lignes de données (305, 306, 307, 308), conçu pour calculer un niveau de remplissage et/ou une topologie de la surface de produit de remplissage d'un milieu dans un récipient (130) à partir des signaux d'émission détectés par les première et deuxième puces radar ;
un agencement de ligne d'horloge (309) reliant la première puce radar au circuit d'évaluation et conçu pour fournir un signal d'horloge commun pour l'évaluation des signaux reçus de la première puce radar et des signaux reçus de la deuxième puce radar au circuit d'évaluation ;
dans lequel l'appareil de mesure de niveau de remplissage (100) présente une pluralité de puces radar (302, 303) ;
dans lequel il n'est pas prévu pour chaque puce radar un agencement de ligne d'horloge (309) reliant la puce radar au circuit d'évaluation (108) pour fournir un signal d'horloge de la puce radar au circuit d'évaluation (108),
dans lequel chaque puce radar sans agencement de ligne d'horloge est synchronisée avec une puce radar dans laquelle un agencement de ligne d'horloge est prévu.

2. Appareil de mesure de niveau de remplissage (301) selon la revendication 1, présentant en outre :
un circuit d'horloge (304) conçu pour fournir un signal d'horloge commun aux première et deuxième puces radar (302, 303) pour synchroniser les deux puces radar.

3. Appareil de mesure de niveau de remplissage (301) selon la revendication 2,
dans lequel le circuit d'horloge (304) présente une seule horloge pour les première et deuxième puces radar (302, 303).

4. Appareil de mesure de niveau de remplissage (301) selon l'une des revendications précédentes,
dans lequel l'appareil de mesure de niveau de remplissage (100) présente une pluralité de puces radar (302, 303) ;
dans lequel moins de circuits d'horloge (304) que de puces radar sont prévus.

5. Appareil de mesure de niveau de remplissage (301) selon l'une des revendications précédentes,
dans lequel l'agencement de ligne d'horloge (309) reliant la première puce radar (302) au circuit d'évaluation présente la même longueur que l'agencement de lignes de données (305).

6. Appareil de mesure de niveau de remplissage (301) selon la revendication 5, présentant en outre :
un circuit d'horloge (509) conçu pour fournir un signal d'horloge commun à la première puce radar (302, 502) et au circuit d'évaluation (108) pour synchroniser la première puce radar et le circuit d'évaluation.

7. Appareil de mesure de niveau de remplissage (301) selon l'une des revendications précédentes,
dans lequel l'appareil de mesure de niveau de remplissage (100) est réalisé sous la forme d'un appareil de mesure de niveau de remplissage FMCW.

8. Appareil de mesure de niveau de remplissage (301) selon l'une des revendications précédentes,
dans lequel les première et deuxième puces radar (302, 303) présentent chacune au moins un convertisseur analogique-numérique intégré, conçu pour convertir le signal de réception en un signal de fréquence intermédiaire numérisé.

9. Appareil de mesure de niveau de remplissage (301) selon l'une des revendications précédentes, conçu pour détecter la topologie d'un milieu dans un récipient.

10. Procédé de mesure d'un niveau de remplissage d'un milieu dans un récipient et/ou d'une topologie d'une surface du milieu avec un appareil de mesure de niveau de remplissage, présentant les étapes suivantes :
synchronisation d'une première puce radar et d'une deuxième puce radar ;
production d'un signal d'émission à haute fréquence avec chaque fois au moins un de plusieurs canaux d'émission de la première puce radar et de la deuxième puce radar ;
réception des signaux d'émission réfléchis à la surface de produit de remplissage avec plusieurs canaux de réception de la première puce radar et de la deuxième puce radar ;
fourniture d'un signal d'horloge commun par la première puce radar pour évaluer les signaux de réception de la première puce radar et les signaux de réception de la deuxième puce radar au circuit d'évaluation ;
calcul du niveau de remplissage et/ou de la topologie du milieu dans le récipient à partir des signaux d'émission détectés par les première et deuxième puces radar ;
dans lequel l'appareil de mesure de niveau de remplissage (100) présente une pluralité de puces radar (302, 303) ;
dans lequel il n'est pas prévu pour chaque puce radar un agencement de ligne d'horloge (309) reliant la puce radar au circuit d'évaluation (108) pour fournir un signal d'horloge de la puce radar au circuit d'évaluation (108),
dans lequel chaque puce radar sans agencement de ligne d'horloge est synchronisée avec une puce radar dans laquelle un agencement de ligne d'horloge est prévu.

11. Élément de programme qui, lorsqu'il est exécuté sur un processeur (109) d'un appareil de mesure de niveau de remplissage (301), conduit l'appareil de mesure de niveau de remplissage à exécuter les étapes selon la revendication 10.

12. Support lisible par ordinateur sur lequel est stocké un élément de programme selon la revendication 11.
